# EUROPEAN PATENT SPECIFICATION

(11) **EP 1 385 396 B1**
(45) Date of publication and mention of the grant of the patent: **05.10.2005**
(21) Application number: 02718339.1
(22) Date of filing: 17.04.2002
(51) Int. Cl.: A23P 1/08, A23G 9/28, A23G 9/22, A23G 3/20

(54) **FOOD MATERIAL DEPOSITOR**
AUSGABEVORRICHTUNG FÜR NAHRUNGSMITTELPRODUKTE
DISPOSITIF DE DEPOSITION DE MATIERES ALIMENTAIRES

(30) Priority: 17.04.2001 GB 0109310
(43) Date of publication of application: 04.02.2004
(73) Proprietor: APV Systems Limited, Peterborough PE4 7AP (GB)
(72) Inventor: DACEY, Raymond Gwilym, Folksworth, Peterborough PE7 3SS (GB)
(74) Representative: Lomas, Geoffrey Michael
(86) International application number: PCT/GB2002/001693
(87) International publication number: WO 2002/082932

(56) References cited:
- EP-A- 0 668 021
- DE-A- 3 410 302
- GB-A- 1 386 469
- US-A- 3 722 758
- US-A- 4 666 723
- US-A- 4 942 910
- US-A- 5 911 813
- US-B1- 6 200 125
- PATENT ABSTRACTS OF JAPAN vol. 011, no. 398 (C-466), 25 December 1987 (1987-12-25) -& JP 62 158456 A (KANEBO FOODS LTD), 14 July 1987 (1987-07-14)

## Description

This invention relates to a depositor suitable for use in depositing a viscous fluid food material, particularly, but not exclusively, liquid candy.

It is known to create a multi-layered food product by bringing together in a manifold streams of different food material, the manifold having a single outlet through which the resulting combined stream of material flows.

The present invention stems from some work to produce a striped candy product by use of a depositor.

A known depositor for producing a striped candy product utilises four pumps for respectively pumping different candies from four hoppers to a combiner nozzle assembly in which the four streams of candy are brought together. Since the depositor requires a separate pump for each hopper, and the pumps have to be operated together, the overall assembly is relatively complicated to maintain and to clean for product changes.

From EP-0 668 021 a depositor is known in which candy mass is deposited from up to three hoppers being arranged in a circle around a cylinder

According to one aspect of the invention a method of depositing a slug of striped food material as defined in claim 1 may be used.

According to a second aspect of the invention a depositor comprises a cylinder provided with a cylinder outlet port and with a four of circumferentially-spaced cylinder inlet ports, four supply passages for different viscous fluid food material (different in colour and/or composition) connecting respective reservoirs for the food materials to the respective cylinder inlet ports, the four reservoirs being arranged in a row as viewed in plan, a piston reciprocable in the cylinder, and piston drive means for reciprocating the piston, an outlet valve controlling flow through the outlet port, and inlet valve means controlling flow through the inlet ports.

Preferably the arrangement is such that in use the piston is retractable away from said outlet, with said outlet valve closed, to create a vacuum in said cylinder, and then said inlet valve means is opened to allow streams of the food material to be sucked into the cylinder through said inlet ports, and then the piston is movable forwardly to expel the charge of material in the cylinder through the cylinder outlet after closing of said inlet valve means.

The outlet valve is preferably a one-way valve, and preferably comprises a one way ball-valve member.

The inlet valve means is preferably constituted by an edge on the piston which uncovers the inlet ports as the piston approaches a fully retracted position, the inlet ports being disposed in the side wall of the cylinder.

The reservoirs are preferably in the form of hoppers, and the supply passages lead from the lower ends of the respective hoppers.

In a preferred embodiment the cylinder inlet ports are just below the level of the lower ends of the hoppers, and conveniently the passages are provided in a plate which defines the base of the hoppers, the cylinder projecting downwardly below the base plate to define the cylinder space which receives the charge of material.

The cylinder is preferably a cylinder sleeve which is received in a hole in said base plate, the lower ends of the passages terminating in openings into the wall of said hole, in substantial register with the inlet ports in the cylinder sleeve.

The upper part of the cylinder is conveniently housed in one of the hoppers.

According to a third aspect of the invention we provide a deposited slug of striped candy made up from four streams of liquid candy of different colours, intermediate stripes of different colours in the deposited slug having been produced by blending of the material in the regions of contact between adjacent streams in a pump cylinder into which the candy streams flow prior to being expelled from the cylinder.

A depositor assembly in accordance with the invention, and suitable for depositing striped candy, will now be described, by way of example only, with reference to the accompanying drawings in which:

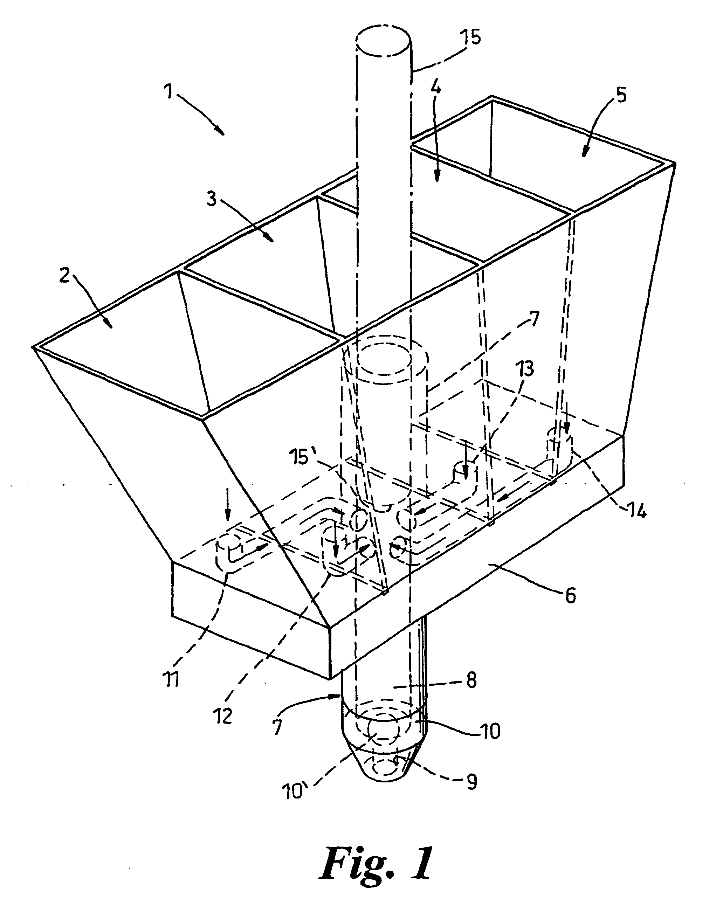

**Figure 1** is a schematic perspective view of the depositor, with the piston shown in broken outline in a fully retracted position; and
**Figure 2** is a perspective view of the cylinder of the depositor assembly of Figure 1.

The depositor 1 comprises four open-topped hoppers 2, 3, 4, 5 arranged in a row, as viewed in plan, and tapering downwards to a common, horizontal base plate 6. Arranging the hoppers in a row facilitates the mounting of similar depositors in side-by-side banks.

A cylinder 7 in the form of a cylinder sleeve extends through a circular hole in base plate 6, through the base of the hopper 3, the cylinder being an interference fit in said hole. Approximately half of the length of the cylinder sleeve is disposed below base plate 6 to define a cylinder space to receive a charge of viscous candy.

A central outlet port 9 is provided in the lower end of the cylinder which is in the form of a depositor nozzle 10, the nozzle incorporating a one-way ball valve 10' which permits liquid candy to be expelled from the cylinder space 8 through the outlet port 9 but does not permit air to be sucked into the cylinder through port 9. The skilled technician will be familiar with suitable ball valves for this purpose.

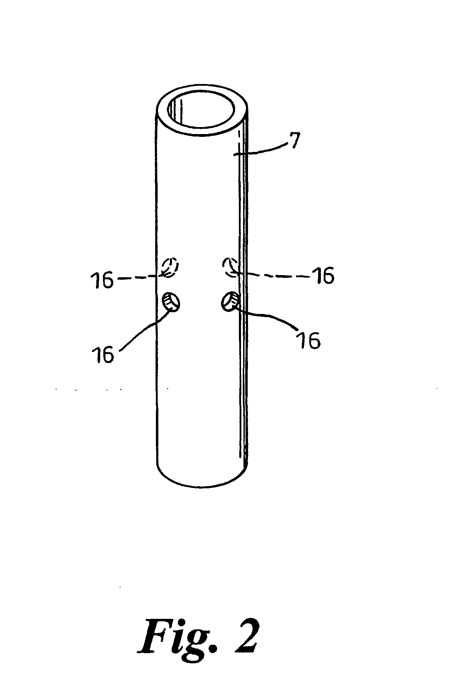

Base plate 6 is drilled with four supply passages 11, 12, 13, 14 which are each of generally L-shape comprising a vertical limb which breaks through the upper surface of base plate 6 to provide respective hopper outlets, and a generally horizontal limb which terminates in a respective opening defined in the bore wall of said hole which receives the cylinder sleeve 7, the four openings being in register with respective circumferentially-spaced inlet ports 16,Figure 2, that are provided in the cylinder sleeve, at positions disposed substantially 90° apart from one another.

A vertically movable piston 15 is reciprocable by a suitable piston drive means, not shown, such as a motor-driven crank.

In operation, the hoppers 2, 3, 4 and 5 are supplied with candy which will usually be of a similar composition, whereby the viscosity characteristics will be similar, but of different colour in the different hoppers.

After priming of the cylinder, the operation is as follows:

The piston can be considered initially to be in a fully advanced position, that is with its lower end close to the lower end 10 of the cylinder. The piston is then raised and, since the ball valve 10' closes, a vacuum is developed in cylinder space 8 as the piston is retracted upwards.

Initially, the inlet ports are closed by the sidewall of the piston, but just before the piston reaches a fully-retracted, upward position, the inlet ports are uncovered by the front (lower) edge 15 of the piston 15. The vacuum created in space 8 causes candy to be sucked into the cylinder space 8 from the four hoppers 2, 3, 4 and 5 by way of the respective supply passages 11, 12, 13 and 14, and inlets 16 The flow resistances of those passages 11 to 14 can be made to be substantially the same if desired, such that substantially equal quantities of the different colours of candy are sucked into the cylinder space 8.

Since the differently coloured candies enter space at positions 90° spaced-apart, this results in a uniformly-striped charge of candy in the cylinder space 8.

On forward movement of the piston, this charge of striped candy is then extruded in passing through nozzle 9 to produce a striped slug of candy, which is generally deposited into a mould carried by a conveyor.

Depending upon the settings of the machine (timing and position of the mould cavity relative to the deposit nozzle) the stripes may be straight or they may be swirled in the deposited slug of material lying in the mould cavity.

Depending upon the compositions of the coloured candies and on the temperatures of the candy supplies, some blending of colours may take place in the cylinder space 8 between the differently-coloured candy streams, leading to the creation of intermediate bands of other colours, thereby giving the appearance of more than four bands of colour in the final product. For example, yellow and blue streams of candy may blend together at the their edges to produce an intermediate band of green candy.

It will be appreciated that the reason why some blending of adjacent streams can take place, when the conditions are chosen to promote this, is the relatively long time that the streams are in contact with one another, in space 8, before they issue from the nozzle outlet 9, as compared with known depositors in which the different candy streams are brought together in a combiner nozzle.

## Claims

1. A method of depositing a slug of striped food material comprises sucking a plurality of independent flows of different viscous fluid food material from four food material reservoirs (2, 3, 4, 5) arranged in a row as viewed in plan, and into a cylinder (7) through respective circumferentially-spaced inlets (16) to the cylinder (7) which are connected with the food reservoirs by respective supply passages (11, 12, 13, 14), preventing reverse flow through said inlets, and then urging the resulting charge of material in the cylinder out of the cylinder through a common outlet (9) so as to extrude the charge into a slug.

2. The method of claim 1 in which the food material is sucked into the cylinder (7) by displacement of a piston (15) within the cylinder.

3. The method of claim 2 in which on retraction of the piston away from said outlet (9), an outlet valve (10') is closed, to create a vacuum in said cylinder, and then an inlet valve means (15', 16) is opened to allow four streams of the food material to be sucked into the cylinder through said inlet ports (16), and then the piston is moved forwardly to expel the charge of material in the cylinder through the cylinder outlet after closing of said inlet valve means.

4. The method of claim 3 in which reverse flow through said inlets is prevented by forward displacement of the piston to a position in which the piston covers said inlets.

5. A depositor comprising a cylinder (7) provided with a cylinder outlet port (9) and with four circumferentially-spaced cylinder inlet ports (16), four supply passages (11, 12, 13, 14) for different viscous fluid food material and connecting respective reservoirs (2, 3, 4, 5) for the food materials to the respective cylinder inlet ports (16), the four reservoirs (2, 3, 4, 5) being arranged in a row as viewed in plan, the depositor further comprising a piston (15) reciprocable in the cylinder, and piston drive means for reciprocating the piston, an outlet valve (10') controlling flow through the outlet port (9), and inlet valve means (15') controlling flow through the inlet ports.

6. A depositor as claimed in claim 5 in which the outlet valve is a one-way valve (10').

7. A depositor as claimed in claim 5 or claim 6 in which the inlet valve means is constituted by an edge (15) on the piston (15) which is so arranged as to uncover the inlet ports (16) as the piston approaches a fully retracted position, the inlet ports being disposed in the side wall of the cylinder.

8. A depositor as claimed in any one of the claims 5 to 7 in which the reservoirs are in the form of hoppers (2, 3, 4, 5), and the supply passages lead from the lower ends of the respective hoppers.

9. A depositor as claimed in claim 8 in which the cylinder inlet ports (16) are just below the level of the lower ends of the hoppers, and the passages (11, 12, 13, 14) are provided in a plate (6) which defines the base of the hoppers, the cylinder projecting downwardly below the base plate to define the cylinder space (8) which receives the charge of material.

10. A depositor as claimed in claim 9 in which the cylinder is a cylinder sleeve which is received in a hole in said base plate, the lower ends of the passages terminating in openings into the wall of said hole, in substantial register with the inlet ports in the cylinder sleeve.

11. A depositor as claimed in any one of claims 8 to 10 in which the upper part of the cylinder is housed in one of the hoppers.

12. A deposited slug of striped candy made up from four streams of liquid candy of different colours, intermediate stripes of different colours in the deposited slug having been produced by blending of the material in the regions of contact between adjacent streams in a pump cylinder into which the candy streams flow prior to being expelled from the cylinder.

## Patentansprüche

1. Verfahren zum Ausgeben eines Strangs gestreifter Nahrungsmittelmasse, umfassend das Saugen mehrerer einzelner Ströme verschiedener zähflüssiger Nahrungsmittelmasse aus vier Nahrungsmittelmassebehältem (2, 3,4, 5), die wie in Draufsicht dargestellt in einer Reihe angeordnet sind, und in einen Zylinder (7) durch entsprechende in Umfangsrichtung beabstandete Einlässe (16) am Zylinder (7), die durch entsprechende Zuleitungen (11, 12, 13, 14) mit den Nahrungsmittelbehältern verbunden sind, so dass ein Rückfluss durch die Einlässe verhindert wird, und anschließendes Hinausdrücken der entstandenen Masseladung im Zylinder durch einen gemeinsamen Auslass (9) aus dem Zylinder heraus, damit die Ladung zu einem Strang extrudiert wird.

2. Verfahren nach Anspruch 1, wobei die Nahrungsmittelmasse durch Verschieben eines Kolbens (15) innerhalb des Zylinders in den Zylinder (7) gesaugt wird.

3. Verfahren nach Anspruch 2, wobei beim Zurückziehen des Kolbens von dem Auslass (9) weg ein Auslassventil (10') geschlossen wird, um in dem Zylinder ein Vakuum zu erzeugen, und dann ein Einlassventilmittel (15', 16) geöffnet wird, so dass vier Ströme der Nahrungsmittelmasse durch die Einlassöffnungen (16) in den Zylinder gesaugt werden können, und dann der Kolben vorwärts bewegt wird, um die Masseladung im Zylinder durch den Zylinderauslass auszustoßen, nachdem das Einlassventilmittel geschlossen wurde.

4. Verfahren nach Anspruch 3, wobei ein Rückfluss durch die Einlässe durch Vorwärtsschieben des Kolbens in eine Position, in welcher der Kolben die Einlässe bedeckt, verhindert wird.

5. Ausgabevorrichtung, umfassend einen Zylinder (7), der versehen ist mit einer Zylinderauslassöffnung (9) und vier in Umfangsrichtung beabstandeten Zylindereinlassöffnungen (16), vier Zuleitungen (11, 12, 13, 14) für verschiedene zähflüssige Nahrungsmittelmassen, die die entsprechenden Behälter (2, 3, 4, 5) für die Nahrungsmittelmassen mit den entsprechenden Zylindereinlassöffnungen (16) verbinden, wobei die vier Behälter (2, 3, 4, 5) wie in Draufsicht dargestellt in einer Reihe angeordnet sind, und die Ausgabevorrichtung des Weiteren einen Kolben (15), der im Zylinder hin- und herbewegt werden kann, ein Kolbenantriebsmittel zum Hin- und Herbewegen des Kolbens, ein Auslassventil (10'), das den Fluss durch die Auslassöffnung (9) steuert, und ein Einlassventilmittel (15'), das den Fluss durch die Einlassöffnungen steuert, umfasst.

6. Ausgabevorrichtung nach Anspruch 5, wobei das Auslassventil ein Einwegventil (10') ist.

7. Ausgabevorrichtung nach Anspruch 5 oder Anspruch 6, wobei das Einlassventilmittel aus einer Kante (15) an dem Kolben (15) besteht, die so angeordnet ist, dass sie die Einlassöffnungen (16) freigibt, wenn sich der Kolben einer vollständig zurückgezogenen Position nähert, wobei die Einlassöffnungen in der Seitenwand des Zylinders angeordnet sind.

8. Ausgabevorrichtung nach einem der Ansprüche 5 bis 7, wobei die Behälter in Form von Trichtern (2, 3, 4, 5) vorliegen und die Zuleitungen von den unteren Enden der entsprechenden Trichter ausgehen.

9. Ausgabevorrichtung nach Anspruch 8, wobei sich die Zylindereinlassöffnungen (16) gerade unterhalb der Ebene der unteren Enden der Trichter befinden und die Zuleitungen (11, 12, 13, 14) in einer Platte (6) vorgesehen sind, welche die Basis der Trichter begrenzt, wobei sich der Zylinder nach unten unterhalb der Basisplatte erstreckt, so dass er einen Zylinderraum (8) begrenzt, der die Masseladung aufnimmt.

10. Ausgabevorrichtung nach Anspruch 9, wobei der Zylinder eine Zylinderbüchse ist, die in einem Loch in der Basisplatte aufgenommen wird, und die unteren Enden der Zuleitungen, die in Öffnungen in der Wand des Lochs enden, sich im Wesentlichen mit den Einlassöffnungen in der Zylinderbüchse decken.

11. Ausgabevorrichtung nach einem der Ansprüche 8 bis 10, wobei der obere Teil des Zylinders von einem der Trichter umschlossen wird.

12. Ausgegebener Strang gestreifter Süßwarenmasse, bestehend aus vier Strömen flüssiger Süßwarenmasse in verschiedenen Farben, wobei die verschiedenfarbigen Zwischenstreifen in dem ausgegebenen Strang durch Vermischen der Masse in den Kontaktbereichen zwischen nebeneinander liegenden Strömen in einem Pumpenzylinder gebildet wurden, in den die Süßwarenmasseströme vor dem Ausstoßen aus dem Zylinder fließen.

## Revendications

1. Procédé pour déposer une portion de matière alimentaire rayée comprenant les étapes consistant à aspirer une pluralité d'écoulements indépendants de différentes matières alimentaires fluides visqueuses à partir de quatre réservoirs de matière alimentaire (2, 3, 4, 5) agencés dans une rangée tels que vus de dessus, et dans un cylindre (7) à travers des orifices d'admission respectifs espacés de manière circonférentielle (16) jusqu'au cylindre (7) qui sont reliés aux réservoirs alimentaires par des passages d'alimentation respectifs (11, 12, 13, 14), empêcher un écoulement inversé à travers lesdits orifices d'admission, et ensuite pousser la charge résultante de matière dans le cylindre à l'extérieur du cylindre à travers un orifice d'évacuation commun (9) de manière à extruder la charge pour obtenir une portion.

2. Procédé selon la revendication 1 dans lequel la matière alimentaire est aspirée dans le cylindre (7) par déplacement d'un piston (15) à l'intérieur du cylindre.

3. Procédé selon la revendication 2 dans lequel, lors d'une rétraction du piston pour s'éloigner dudit orifice d'évacuation (9), une soupape d'évacuation (10') est fermée pour créer un vide dans ledit cylindre, et ensuite des moyens formant soupape d'admission (15', 16) sont ouverts pour permettre l'aspiration de quatre flots de matière alimentaire dans le cylindre à travers lesdits orifices d'admission (16), et ensuite le piston est déplacé vers l'avant pour expulser la charge de matière dans le cylindre à travers l'orifice d'évacuation de cylindre après une fermeture desdits moyens formant soupape d'admission.

4. Procédé selon la revendication 3 dans lequel un écoulement inversé à travers lesdits orifices d'admission est empêché par déplacement vers l'avant du piston jusqu'à une position dans laquelle le piston recouvre lesdits orifices d'admission.

5. Dispositif de déposition comprenant un cylindre (7) muni d'un orifice d'évacuation de cylindre (9) et de quatre orifices d'admission de cylindre espacés de manière circonférentielle (16), quatre passages d'alimentation (11, 12, 13, 14) pour différentes matières alimentaires fluides visqueuses et reliant des réservoirs respectifs (2, 3, 4, 5) pour les matières alimentaires aux orifices d'admission de cylindre respectifs (16), les quatre réservoirs (2, 3, 4, 5) étant agencés dans une rangée tels que vus de dessus, le dispositif de déposition comprenant en outre un piston (15) animé d'un mouvement de va-et-vient dans le cylindre, et des moyens d'entraînement de piston pour donner au piston un mouvement de va-et-vient, une soupape d'évacuation (10') commandant un écoulement à travers l'orifice d'évacuation (9), et des moyens formant soupape d'admission (15') commandant un écoulement à travers les orifices d'admission.

6. Dispositif de déposition selon la revendication 5 dans lequel la soupape d'évacuation est une soupape à une voie (10').

7. Dispositif de déposition selon la revendication 5 ou 6 dans lequel les moyens formant soupape d'admission sont constitués d'un bord (15) sur le piston (15) qui est agencé de manière à découvrir les orifices d'admission (16) lorsque le piston s'approche d'une position entièrement rétractée, les orifices d'admission étant disposés dans la paroi latérale du cylindre.

8. Dispositif de déposition selon l'une quelconque des revendications 5 à 7 dans lequel les réservoirs ont la forme de trémies (2, 3, 4, 5), et les passages d'alimentation partent des extrémités inférieures des trémies respectives.

9. Dispositif de déposition selon la revendication 8 dans lequel les orifices d'admission de cylindre (16) se situent juste au-dessous du niveau des extrémités inférieures des trémies, et les passages (11, 12, 13, 14) sont créés dans une plaque (6) qui définit la base des trémies, le cylindre faisant saillie vers le bas au-dessous de la plaque de base pour définir l'espace de cylindre (8) qui reçoit la charge de matière.

10. Dispositif de déposition selon la revendication 9 dans lequel le cylindre est une chemise de cylindre qui est reçue dans un trou dans ladite plaque de base, les extrémités inférieures des passages se terminant dans des ouvertures dans la paroi dudit trou, en coïncidant sensiblement avec les orifices d'admission dans la chemise de cylindre.

11. Dispositif de déposition selon l'une quelconque des revendications 8 à 10 dans lequel la partie supérieure du cylindre est reçue dans l'une des trémies.

12. Portion déposée en bonbon rayé constituée de quatre flots de bonbon candi liquide de différentes couleurs, des rayures intermédiaires de différentes couleurs dans la portion déposée ayant été produites en mélangeant la matière dans les zones de contact entre des flots adjacents dans un cylindre de pompe dans lequel les flots de sucre candi s'écoulent avant d'être expulsés du cylindre.
